# EUROPEAN PATENT APPLICATION

(11) **EP 4 757 422 A2**
(43) Date of publication of application: **10.06.2026**
(21) Application number: 26161714.6
(22) Date of filing: 04.08.2023
(51) Int. Cl.: H04W 40/22

(54) **SATELLITE INTER-NODE MOBILITY MANAGEMENT**

(30) Priority: 05.08.2022 US 202263395513 P
(62) Divisional of application: 23761317.9
(71) Applicant: InterDigital Patent Holdings, Inc., Wilmington, DE 19809 (US)
(72) Inventor: WATTS, Dylan, Montreal, H3G 1X6 (CA); TEYEB, Oumer, Montreal, H3A 3G4 (CA); MARTIN, Brian, Farnham, GU9 9AN (GB)
(74) Representative: AWA Sweden AB

(57) **Abstract**

Devices and techniques for supporting inter-node mobility management. An example device may be a first base station. The first base station may include a processor configured to determine that a connection establishment condition has been satisfied. The connection establishment condition may be associated with a satellite position relative to a location. The first base station may initiate a random access channel (RACH) procedure with a second base station based on the connection establishment condition being satisfied. The first base station may establish a Uu link between the first base station and the second base station. The Uu link may be established through a satellite link. The first base station may receive mobility management signaling from the second base station via the Uu link.

## Description

### CROSS-REFERENCE TO RELATED APPLICATIONS

This application claims the benefit of U.S. Provisional Patent Application No. 63/395,513, filed August 5, 2022, the contents of which are hereby incorporated by reference herein.

### BACKGROUND

Non-terrestrial networks (NTN) may facilitate deployment of wireless networks in some areas.

A basic NTN may comprise an aerial or space-borne platform which transports signals between a land-based gNodeB (gNB) and a user equipment (UE). The signals may be transported between the gNB and the UE via a gateway (GW). Release 17 (Rel-17) of the new radio (NR) NTN standard may support power class 3 UEs with omnidirectional antenna and linear polarization. Rel-17 may also support very small aperture antenna (VSAT) terminals with directive antenna and circular polarization. Rel-17 NTN UEs may be capable of communicating with a Global Navigation Satellite System (GNSS).

Aerial or space-borne platforms may be classified in terms of orbit. For example, low-earth orbit (LEO) satellites may orbit at an altitude between 300 - 1500 km. As another example, geostationary earth orbit (GEO) satellites may orbit at an altitude of 35 786 km. As another example, medium-earth orbit (MEO) satellites may orbit at an altitude between 7000 - 25000 km. As another example, high-altitude platform stations (HAPS) may be located at an altitude between 8 - 50 km. Satellite platforms may be further classified as having a "transparent" or "regenerative" payload. Transparent satellite payloads implement frequency conversion and RF amplification in both uplink and downlink. In some cases, multiple transparent satellites may be connected to one land-based gNB. Regenerative satellite payloads can implement either a full gNB or gNB distributed unit (DU) onboard the satellite. Regenerative payloads may perform digital processing (e.g., demodulation, decoding, re-encoding, re-modulation and/or filtering) on the signal.

### SUMMARY

Device and techniques for inter-node mobility management are provided herein.

An example device may be a first base station that includes a processor configured to perform one or more actions. The first base station may determine that a connection establishment condition has been satisfied. The connection establishment condition may be associated with a satellite position relative to a location. The first base station may initiate a random access channel (RACH) procedure with a second base station based on the connection establishment condition being satisfied. The first base station may establish a Uu link between the first base station and the second base station. The Uu link may be established through a satellite link. The first base station may receive mobility management signaling from the second base station via the Uu link.

The connection establishment condition may be satisfied by the satellite position being within a distance threshold from the location. The connection establishment condition may be satisfied by a first time associated with the satellite position being within a fixed timing offset from a second time associated with the satellite position passing the location. The RACH procedure may be initiated using resources that are dedicated for inter-base station communication.

The first base station may detect signaling associated with a cell that is dedicated for inter-base station communication or a cell on which inter-base station communication is prioritized. The first base station may determine that an activation condition has been satisfied. The first base station may, based on the activation condition being satisfied, send an activation request message to the second base station. The first base station may receive, from the second base station, an activation response message that indicates for the first base station to activate a WTRU capability (e.g., a portion of the first base station that is capable of establishing the Uu link).

The mobility management signaling may be part of a mobility management signaling exchange. The mobility management signaling exchange may be associated with transitioning a wireless transmit/receive unit (WTRU) from the second base station to the first base station. Upon completion of the mobility management signaling exchange, the first base station may receive, from the second base station, a deactivation command. Based on the deactivation command, the first base station may deactivate the WTRU capability (e.g., a portion of the first base station that is capable of establishing the Uu link).

The first base station may determine that the satellite position is within a distance threshold from the location. In response to the determination that the satellite position is within the distance threshold from the location, the first base station may deactivate the WTRU capability (e.g., a portion of the first base station that is capable of establishing the Uu link).

The processor may be configured to establish a Uu interface for inter-gNB communication. The processor may be configured to tunnel Xn interface information through the Uu interface. For example, the Xn interface information may be tunneled through a UE-side of either the first gNB or the second gNB.

For example, the inter-gNB communication may include communication between a first gNB and a second gNB. The Uu interface may be established through a satellite link. The satellite link may include a first gateway, a satellite, and/or a second gateway. The first gateway may be in radio communication with the first gNB. The second gateway may be in radio communication with the second gNB.

The processor may be further configured to establish a cell for the second gNB. For example, the cell may be dedicated for inter-gNB communication. For example, the cell may be established to prioritize inter-gNB communication.

### BRIEF DESCRIPTION OF THE DRAWINGS

Furthermore, like reference numerals in the figures indicate like elements.
FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 is a system diagram illustrating a non-terrestrial network (NTN) in which one or more disclosed embodiments may be implemented.
FIG. 3A is a block diagram illustrating an example user plane (UP) protocol stack.
FIG. 3B is a block diagram illustrating an example control plane (CP) protocol stack.
FIGs.4A-4C are system diagrams illustrating an example soft feeder-link switch procedure.
FIGs. 5A and 5B are call flow diagrams illustrating example signaling during a handover procedure.
FIG. 6 is a block diagram illustrating an example Xn user plane (Xn-U) protocol stack and an example Xn control plane (Xn-C) protocol stack.
FIG. 7 is a block diagram illustrating the establishment of a dedicated cell for inter-gNB signaling.
FIG. 8 is a block diagram illustrating a gNB using dedicated resources to access a cell shared by other devices.
FIG. 9 is an exemplary protocol stack demonstrating a Uu-based Xn interface via WTRU capabilities (e.g., a UE-side) of a gNB.
FIGs. 10A and 10B are call flow diagrams illustrating setup procedures for the WTRU capabilities (e.g., a UE-side) of a gNB.
FIGs. 11A and 11B are call flow diagrams illustrating conditional WTRU capabilities (e.g., a UE-side) setup procedures with conditional configuration(s).
FIG. 12 is a timing diagram illustrating an example of periodic activation and deactivation of the WTRU capabilities (e.g., a UE-side) of a gNB.
FIGs. 13A-13D are system diagrams illustrating a soft feeder-switch procedure using inter-gNB signaling over a Uu interface.
FIG. 14 is a call flow diagram illustrating example signaling during the soft feeder-switch procedure illustrated in FIGs. 13A-13D.

### DETAILED DESCRIPTION

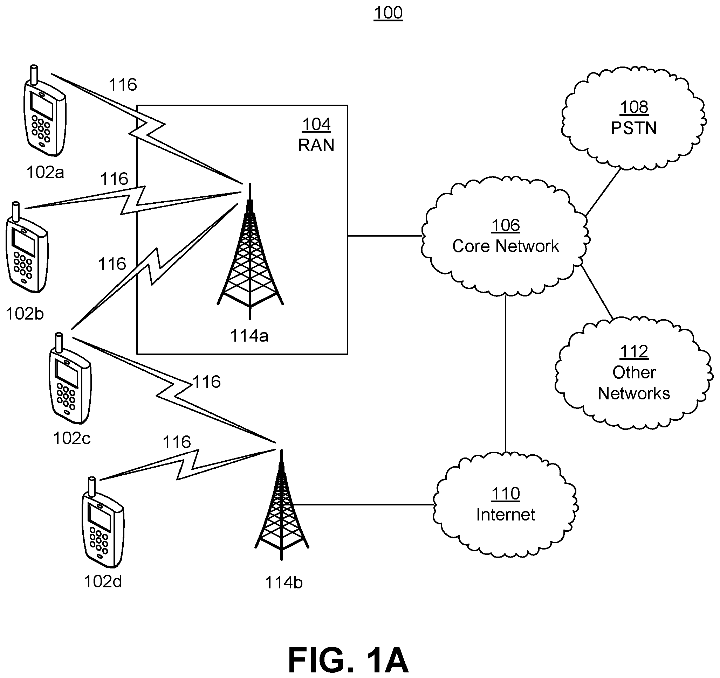

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

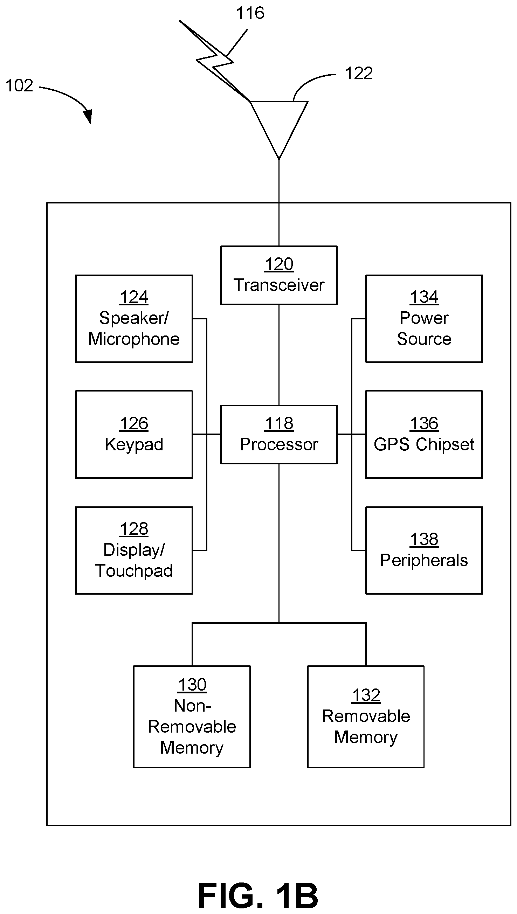

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

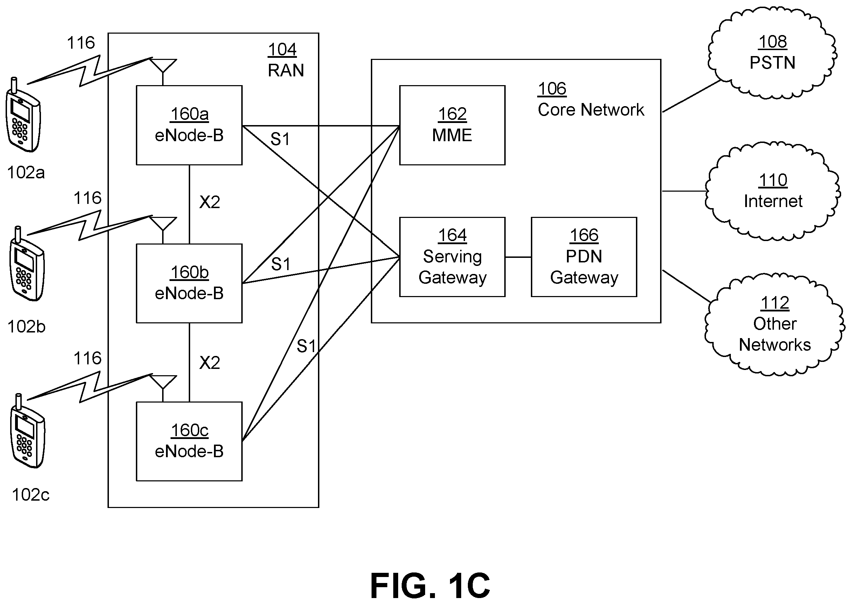

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

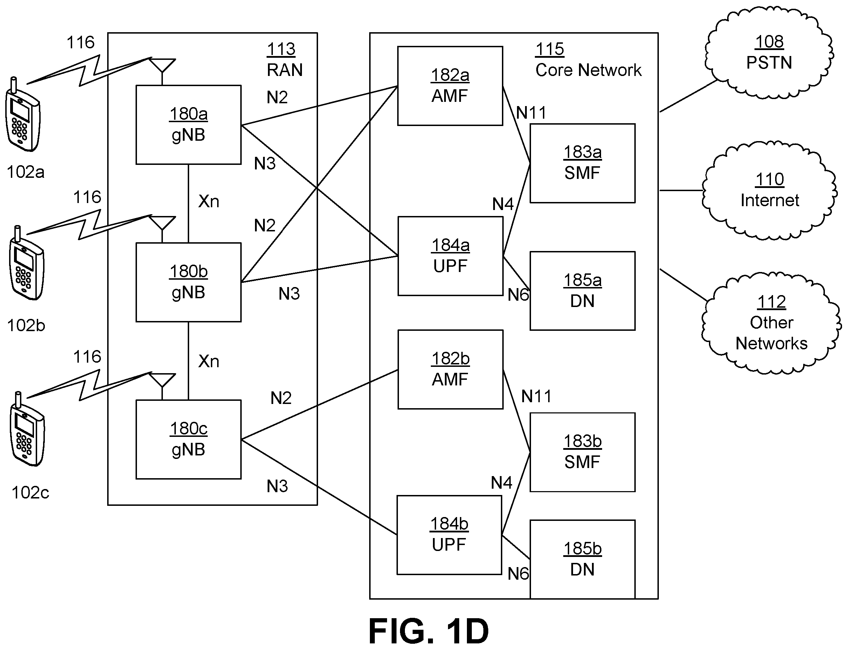

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

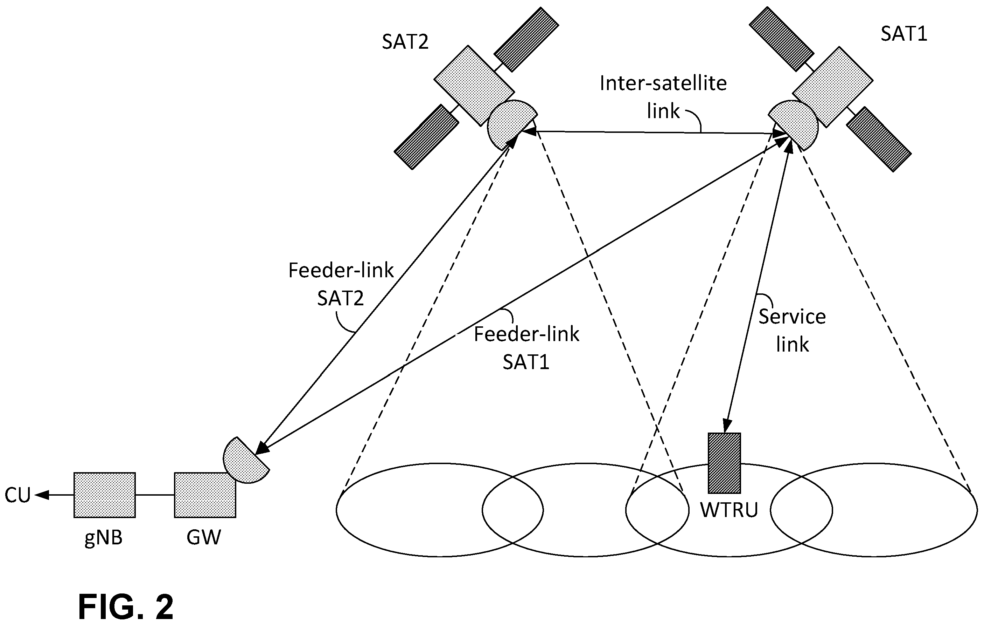

As illustrated in FIG. 2, several radio interfaces may be established in NTNs. For example, a feeder-link may refer to a wireless link between a satellite and a gateway. A service link may refer to a radio link between a satellite and a WTRU. An inter-satellite link (ISL) may refer to a transport link between satellites. The ISL may be supported by regenerative payloads. The ISL may be implemented using a radio or optical interface (e.g., a 3GPP radio or proprietary optical interface).

Different interfaces may be used for each radio link. The different interfaces may depend on the satellite payload configuration. For example, for a transparent payload, the NR-Uu radio interface may be used for the service link. In a transparent payload, the NR-Uu radio interface may be used for the feeder-link. For a regenerative payload, the NR-Uu interface may be used for the service link. For a retentive payload, a satellite radio interface (SRI) may be used for the feeder-link.

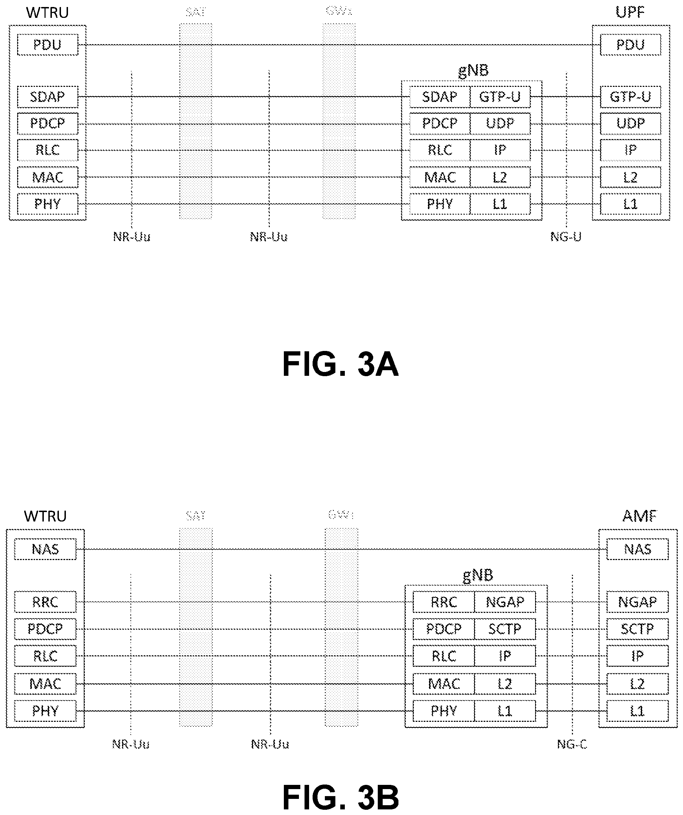

FIG. 3A illustrates an example user plane (UP) protocol stack for a transparent payload configuration. FIG. 3B illustrates an example control plane (CP) protocol stack for a transparent payload configuration. As illustrated, both protocol stacks may include a radio link control (RLC) layer below a packet data convergence protocol (PDCP) layer, a medium access control (MAC) layer below the RLC layer, and a physical (PHY) layer below the MAC layer. The UP protocol stack may also include a service data adaptation protocol (SDAP) layer above the PDCP layer. The SDAP layer may perform functions such as mapping between quality of service (QoS) flow bearers to data radio bearers and/or marking QoS flow identifiers in data packets. The CP protocol stack may include a radio resource control (RRC) layer above the PDCP layer. The RRC layer may perform functions such as inter-RAT mobility and/or mobility functions (e.g., handover, context transfer).

An NTN satellite may support multiple cells. Each cell may include one or more satellite beams. Satellite beams may cover a footprint on Earth (e.g., like a terrestrial cell). Satellite beams may range in diameter. For example, a satellite beam may range from 100-1000 km in LEO deployments. Beam footprints in LEO deployments may change over time due to satellite movement. A satellite beam may range from 200-3500 km diameter in GEO deployments. Beam footprints in GEO deployments may remain fixed relative to Earth. Beam movement may be classified as "Earth moving" (e.g., in LEO deployments where the beam moves continuously across the Earth). Beam movement may be classified as "Earth fixed" (e.g., in GEO deployments where the beam is steered to remain covering a fixed location until a new cell overtakes the coverage area).

The round-trip time (RTT) and maximum differential delay of NTNs may be larger than that of terrestrial systems. This may be due to the altitude of NTN platforms and beam diameter. For example, in a transparent NTN deployment, RTT can range from 25.77 milliseconds (e.g., for a LEO deployment at an altitude of 600 km) to 541.46 milliseconds (e.g., for a GEO deployment). The maximum differential delay in a transparent NTN deployment may range from 3.12 milliseconds to 10.3 milliseconds.

RTT for a transparent configuration may depend on the service and feeder links. The RTT of a regenerative payload may depend on the service link (e.g., only on the service link). The RTT of a regenerative payload may be approximately half that of a transparent payload. Prior to initial access, a WTRU may perform timing pre-compensation. This may help minimize (or at least reduce) impact on existing NR systems (e.g., by avoiding preamble ambiguity or properly timing reception windows).

As part of the timing pre-compensation, the WTRU may obtain its position via GNSS. The WTRU may obtain the feeder-link delay (or a common delay). The WTRU may obtain a satellite position (e.g., via satellite ephemeris data). The satellite ephemeris data may be broadcast (e.g., periodically broadcast) in system information. The satellite ephemeris data may include the satellite's speed, direction, and/or velocity. The WTRU may estimate the distance and/or delay from the satellite. The WTRU may add the feeder-link delay component to the estimated delay to obtain the full WTRU-to-gNB RTT. The full WTRU-to-gNB RTT may be used to offset communication timing (e.g., timers, reception windows, and/or timing relations). The network may perform frequency compensation.

In NTNs, the difference in reference signal received power (RSRP) between cell center and cell edge may not be as pronounced as in terrestrial systems. There may be a larger region of cell overlap in NTNs compared to terrestrial systems. Measurement-based mobility may become less reliable in an NTN environment. NTNs may utilize conditional handover and/or measurement reporting triggers relying on location and time. Enhanced mobility techniques may be of particular interest in LEO deployments. For example, in LEO deployments, due to satellite movement, even a stationary WTRU may be expected to perform mobility approximately every 7 seconds. The frequency of the mobility checks may depend on deployment characteristics.

In non-geostationary orbit (NGSO) deployments (e.g., LEO, MEO), there may be a transition point as a satellite moves overhead. The transition point may indicate that the satellite has moved sufficiently far from the geographic location of a terrestrial-based gateway that feeder-link may no longer be suitable (e.g., due to the curvature of the earth). At the transition point (e.g., sometimes referred to as a feeder-link switch point), the satellite may undergo a feeder-link switch. The feeder-link switch may allow the satellite to terminate the feeder-link with the former gateway. During the feeder-link switch, the satellite may establish a new feeder-link with an incoming gateway. Types of feeder-link switch may include a hard switch and a soft switch.

In a hard feeder-link switch, the new feeder-link from the satellite to the incoming gateway may be established after the feeder-link with the former gateway has been severed. A hard feeder-link switch may result in service continuity issues due to the disappearance of cells associated with a former gNB associated with the former gateway. A hard feeder-link switch may result in high signaling overhead due to large-scale random access to an incoming gNB associated with the incoming gateway.

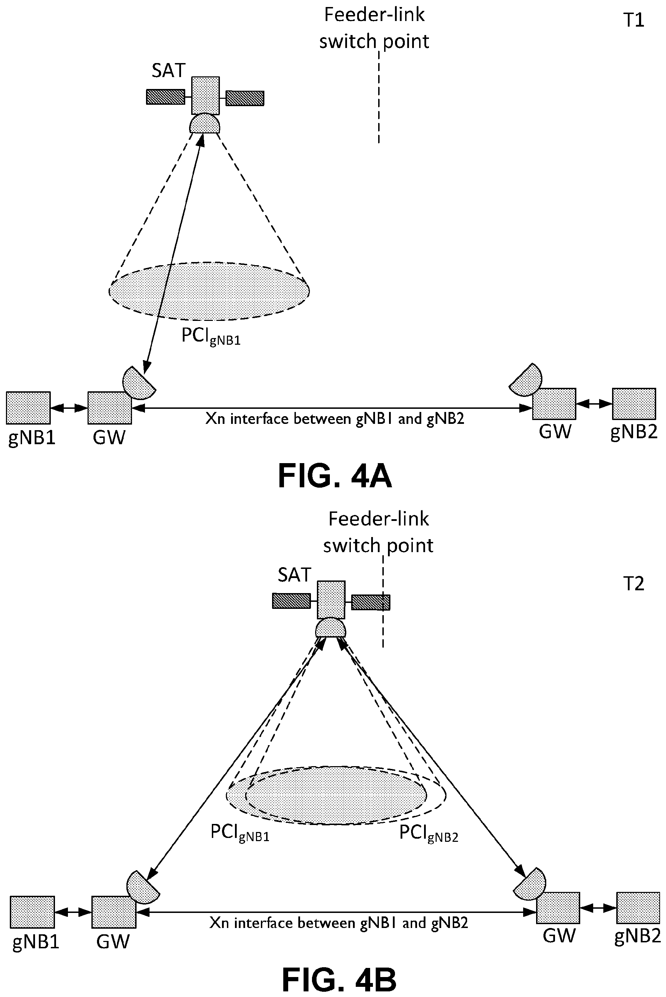

FIGs. 4A-4C illustrate a soft feeder-link switch. In a soft feeder-link switch, there is a temporary period where the satellite simultaneously supports multiple feeder-links to the former gateway and to the incoming gateway. This enables the satellite to broadcast cells associated with both gateways and their associated gNBs for a temporary period prior to the feeder-link switch. In a soft feeder-link switch, WTRUs served by the satellite may gradually transition over to the new gNB associated with the incoming gateway. This transition may be further facilitated by biasing the measurement thresholds of cells associated with neighboring cells. The transition may be completed via time- and/or location-based conditional handover. These techniques reduce the instantaneous signaling load associated with random access to the incoming cell. These techniques also help to mitigate service continuity issues.

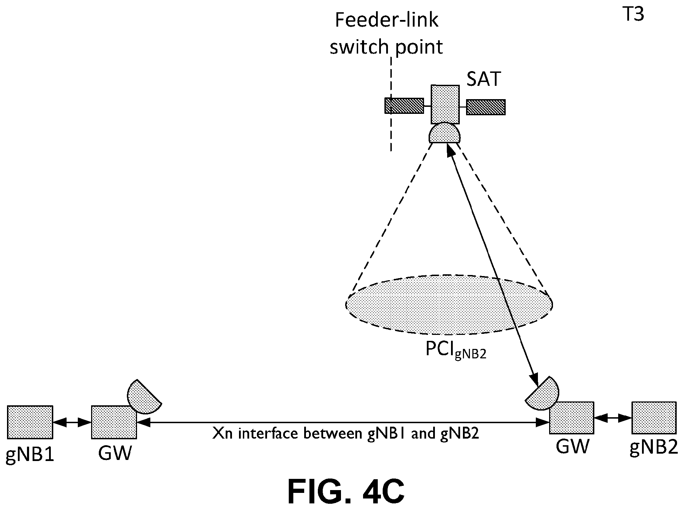

For example, as illustrated in FIG. 4A, at a time T1, a satellite (labeled "SAT") may have a feeder-link connection with gNB1 and may be approaching a feeder-link switch point between gNB1 and gNB2. As illustrated in FIG. 4B, the satellite may reach the feeder-link switch point. At T2, the satellite may have a feeder-link connection with gNB1 and gNB2. As illustrated in FIG. 4C, at a time T3, the satellite may have passed the feeder-link switch point. At time T3, the satellite may maintain the feeder-link connection with gNB2 and end the feeder-link connection with gNB1.

A terrestrial connection may be available between the gNBs associated with the former and incoming gateways. The terrestrial connection may be used to establish an Xn interface between the gNBs. Through the Xn interface, the gNBs may exchange WTRU mobility signaling. For example, of the gNBs may exchange WTRU context information, as described in more detail below.

Cell-level mobility in NR may use RRC signaling (e.g., explicit RRC signaling). For example, a source gNB may indicate the current serving cell and the target gNB may indicate the cell to which the WTRU is about to transition.

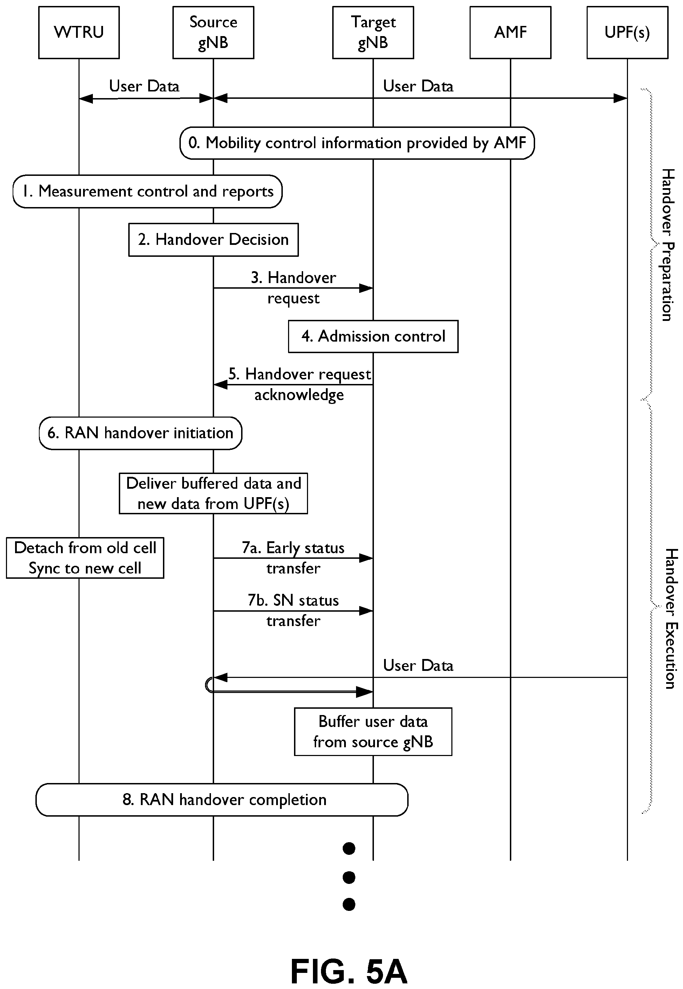

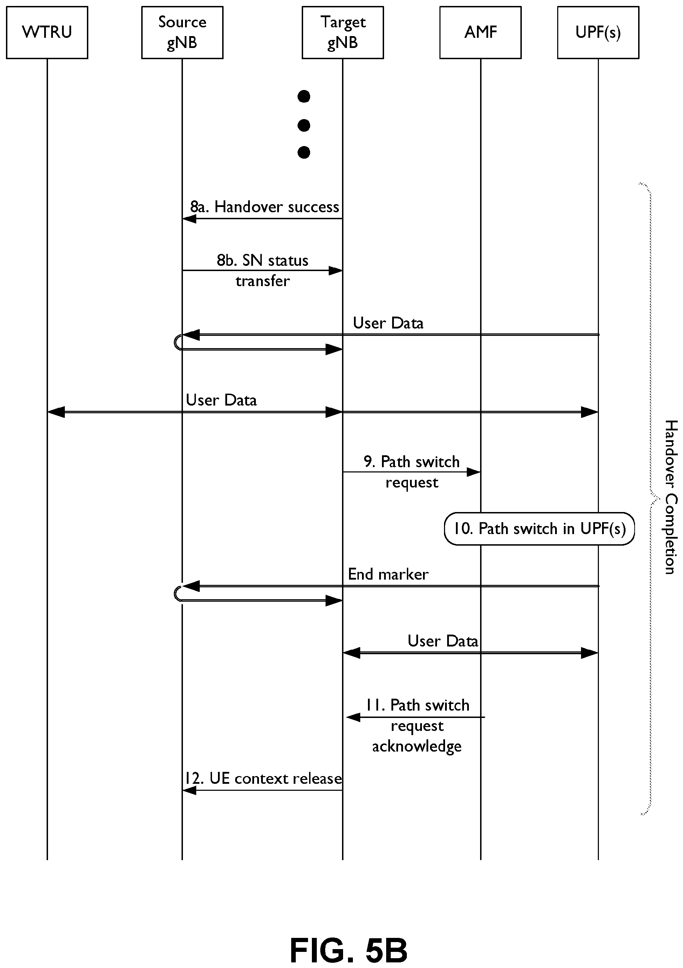

FIGs. 5A and 5B illustrate an inter-gNB mobility (e.g., handover) procedure. As illustrated, user data may be transmitted between a plurality of devices (e.g., a WTRU, a source gNB, and user plane functions (UPFs)). At 0, the source gNB may receive mobility control information from the access and mobility management function (AMF). The source gNB may have WTRU context information. The WTRU context information may provide information regarding roaming and access restrictions. The roaming and access restrictions may have been provided at connection establishment or at the last timing advance (TA) update.

At 1, the source gNB may configure a WTRU measurement procedure (e.g., measurement objects, reporting event). The WTRU may report according to a measurement configuration. Measurement reporting may be periodic or may be triggered based on an event. For example, such an event may involve neighboring cell measurements exceeding a threshold (e.g., an absolute threshold or a relative threshold as compared to a serving cell). Based on the measurement report and other radio resource management (RRM) information, the source gNB may decide to hand over the WTRU.

At 2, the source gNB may decide to hand over the WTRU. The handover decision may be made based on the measurements received from the WTRU. At 3, the source gNB may issue a handover request message to the target gNB passing a transparent radio resource control (RRC) container with information that may be used to prepare for the handover at the target gNB. For example, the information may include at least the target cell identifier, a key (e.g., KgNB*), the cell radio network temporary identifier (C-RNTI) of the WTRU in the source gNB, RRM-configuration including WTRU inactive time, basic access stratum (AS)-configuration including antenna information and downlink (DL) carrier frequency, the current quality of service (QoS) flow to data radio bearers (DRB) mapping rules applied to the WTRU, the system information block 1 (SIB1) from the source gNB, the WTRU capabilities for different radio access technologies (RATs), protocol data unit (PDU) session related information, and/or the like. The information may include WTRU-reported measurement information including beam-related information, if available. The PDU session related information may include the slice information and QoS flow level of one or more QoS profile(s).

At 4, admission control may be performed by the target gNB to determine if the WTRU can be admitted. The target gNB may prepare resources for the handover. For example, the target gNB may prepare resources for the handover based on determining that the WTRU may be admitted. At 5, the target gNB may send an acknowledgement of the handover request (e.g., Handover Request Acknowledge) to the source gNB. The acknowledgement may include a handover command (e.g., an RRC reconfiguration message). The handover command may be in a transparent container to be sent to the WTRU. The handover command may be sent via control signaling (e.g., RRC signaling).

If the source gNB receives the acknowledgement of the handover request, or if the transmission of the handover command is initiated in the DL towards the WTRU, data forwarding may be initiated from the source gNB to the target gNB. For example, at 6, the RAN handover may be initiated at the source gNB. The source gNB may trigger the handover by forwarding the handover command to the WTRU. The handover command may include information that may be used to access the target cell. For example, the handover command may include the target cell identifier, the new C-RNTI, and/or the target gNB security algorithm identifiers for the selected security algorithms. The handover command may include a set of dedicated random access channel (RACH) resources, the association between RACH resources and Synchronization Signal/PBCH block(s) (SSB(s)), the association between RACH resources and WTRU-specific channel state information reference signals (CSI-RS) configuration(s), common RACH resources, system information of the target cell, and/or the like.

The source gNB may deliver buffered data and new data from the UPF(s). At 7, the source gNB may send one or more status message(s). For example, at 7a, the source gNB may send an early status transfer message. The source gNB may send, at 7b, an SN status transfer message to the target gNB. The status message(s) may convey the UL package data convergence protocol serial number (PDCP SN) receiver status and/or the DL PDCP SN transmitter status of DRBs for which PDCP status preservation applies (e.g., for radio link control acknowledged mode (RLC AM)). The source gNB may also forward user data from the UPF(s) to the target gNB (e.g., during execution of the handover procedure). The target gNB may buffer the user data from the source gNB until handover is complete.

The WTRU may detach from the source cell (e.g., associated with the source gNB). The WTRU may synchronize to the target cell. The RRC handover may be completed at 8. For example, the handover procedure may be completed by the WTRU sending a message (e.g., an *RRCReconfigurationComplete* message) to the target gNB. The WTRU may release the resources from the source gNB. If the handover is completed, the target WTRU may, at 8a, send a handover success message to the source gNB to notify the source gNB of the successful handover. At 8b, the source gNB may send a status message to the target gNB. The source gNB may continue forwarding user data it receives to the target gNB.

At 9, the target gNB may send a path switch request message to the AMF. The path switch request may switch the DL data path towards the target gNB. At 10, the AMF may switch the DL data path towards the target gNB. The UPF may send one or more end marker packets on the original DL path to the source gNB. The end marker packets may be sent using a PDU session/tunnel. The AMF and UPF(s) may release any user plane (or transport network layer (TNL)) resources towards the source gNB.

At 11, the AMF may confirm the path switch request message by sending an acknowledgement message (e.g., path switch request acknowledge). At 12, the target gNB may send a WTRU context release message to the source gNB. The target gNB may send the WTRU context release message in response to receiving the acknowledgement message from the AMF. The WTRU context release message may be used to inform the source gNB about the success of the handover. The source gNB may release radio and control plane related resources associated with the WTRU context. Any ongoing data forwarding may continue.

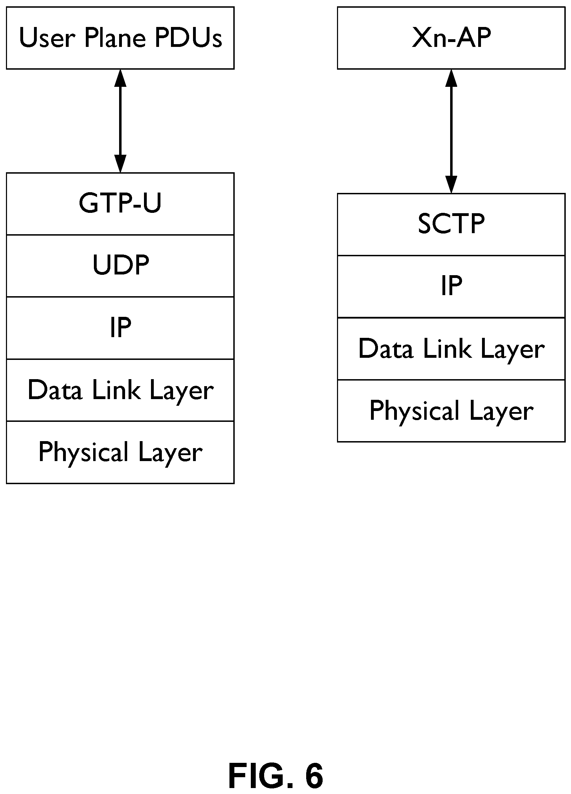

An Xn interface may be used between two NG-RAN nodes (e.g., gNBs). As illustrated in FIG. 6, the Xn interface may include an Xn user plane (UP) (shown on the lefthand side of FIG. 6) and an Xn control plane (CP) (shown on the righthand side of FIG. 6). As illustrated, the UP transport network layer may include an internet protocol (IP) layer. The UP transport network layer may include a general packet radio service (GPRS) tunneling protocol user plane (GTP-U) on top of the IP layer. The UP transport network layer may include a user datagram protocol (UDP) to communicate with UP power distribution units. The Xn UP may provide non-guaranteed delivery of UP power distribution units. The Xn UP may support data forwarding and flow control.

The CP transport network layer may include a stream control transmission protocol (SCTP) on top of an IP layer. The SCTP layer may deliver application layer messages. The transport IP layer point-to-point transmission may be used to deliver signaling to power distribution units. The Xn CU interface may support Xn interface management, WTRU mobility management (including context transfer and RAN paging), and/or dual connectivity. An Xn-AP interface may be established via transmission of an Xn setup request message (e.g., *XNSetupRequest*) from the source gNB to the target gNB. The target gNB may confirm the setup (e.g., by responding with an *XNSetupResponse* message).

In an example, gNBs may use the Xn interface to enact certain network operations. Xn interface information may be communicated over the Xn interface. For example, gNBs may communicate Xn interface information over the Xn interface. For example, gNBs may communicate Xn interface information over the Xn interface to enact network operations. For example, gNBs may communicate Xn interface information over the Xn interface to perform handovers and/or to enable dual connectivity. Xn interface information may include any information communicated over the Xn interface. For example, Xn interface information may include WTRU context information transmitted over the Xn interface. The WTRU context information may be used to perform handover.

A physical, terrestrial-based connection may exist between a former gNB (e.g., source gNB) and an incoming gNB (e.g., target gNB). The gNBs may use the connection to execute a feeder-link switch. The connection may be used to establish an interface between gNBs (e.g., an Xn interface). The Xn interface may be used to exchange relevant mobility signaling between gNBs. For example, mobility signaling may allow WTRUs to transition from one gNB to another prior to a feeder-link switch.

A former gNB and an incoming gNB may be located in different cities, countries, and/or continents. The former gNB and the incoming gNB may also belong to different network vendors. A physical link may not exist between the two gNBs. Furthermore, transitioning WTRUs served by the satellite in the transitory period before a feeder-link switch may cause a large signaling load. Even if a physical link exists between the former gNB and the incoming gNB, the physical link will have to have sufficient throughput and latency characteristics to deal with the large-scale and time-critical signaling load.

For example, the physical link between the former gNB and the incoming gNB may lack sufficient throughput characteristics. The lack of sufficient throughput characteristics may increase the risk of extended service disruption. For example, the service disruptions may increase due to WTRUs performing initial access and/or core network re-registration to the incoming gNB. Signaling storms caused by lack of coordination between the gNBs may increase service disruptions. The service disruptions may occur periodically as subsequent satellites within an orbit undergo the same feeder-link switch.

Inter-base station communication (e.g., inter-gNB signaling) may be transmitted over the air. For example, the inter-gNB signaling may be transmitted via a Uu interface. A satellite (e.g., a satellite in communication with two gNBs) may forward information from a former gNB to an incoming gNB. For example, the satellite may forward information via a feeder-link. For example, the satellite may forward information via a backhaul link. The radio link between gNBs through the satellite may be referred to as a satellite link.

A Uu interface may enable the communication of certain information. For example, the Uu interface (e.g., a radio interface) may enable communication between a WTRU and a gNB (or the gNB distributed unit (DU)). The Uu interface may include a physical layer, data link layer, and/or network layer. The Uu interface may provide physical channels to carry data over the radio path and logical channels to carry a particular type of data. There are two types of logical channels: signaling and control channels, and traffic channels.

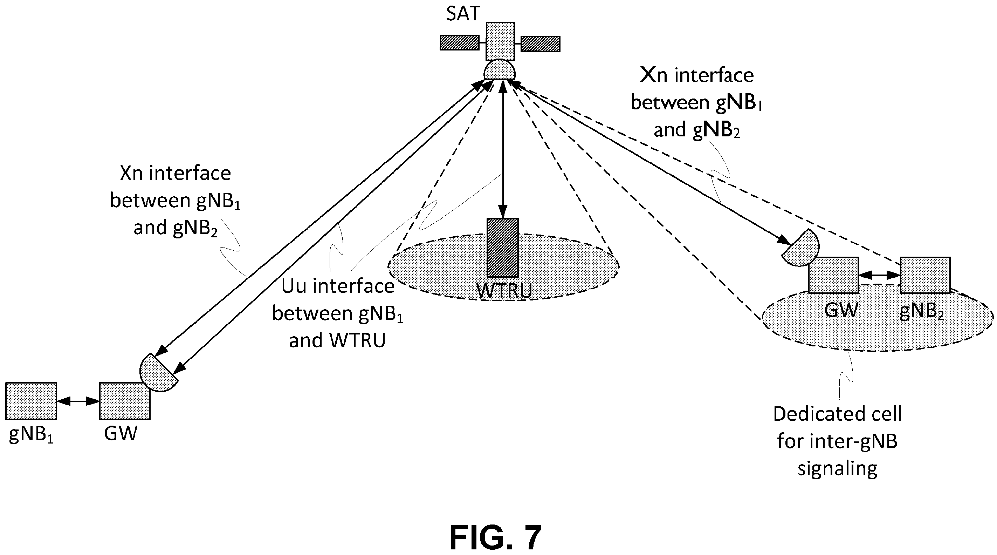

Cellular networks may be divided, where each division may be associated with a respective geographical area. The divisions may be called cells. A gNB (e.g., base station) may support one or more cells (e.g., a gNB may cover/service a delineated area, sometimes referred to as a cell). Each cell may be supported (e.g., serviced) by a gNB. WTRUs within a cell may communicate with the gNB via radio waves over frequency channels assigned by the gNB. In some examples, the former (e.g., source) gNB (e.g., gNB1) may create a new cell via the satellite (SAT) to serve the incoming gNB (e.g., gNB2), as illustrated in FIG. 7. The dedicated cell may be created at some time prior to a feeder-link switch. The dedicated cell may be created when the satellite is some distance from a feeder-link switch point. The dedicated cell may be used to establish inter-node signaling between gNB1 and gNB2. The dedicated cell may be used to establish an interface (e.g., an Xn interface) for WTRU mobility management signaling (e.g., transferring WTRU context information).

The dedicated cell may be dedicated to the establishment of an inter-gNB connection. The dedicated cell may be configured such that the intended gNB (e.g., only the intended gNB) can access the dedicated cell. For example, beam steering techniques or other cell barring mechanisms (e.g., reserved resources, cell barring bit(s), or reserved PLMN) may be used to ensure that only the intended gNB can access the dedicated cell. The dedicated cell may be treated separately from other cells broadcast by the satellite. For example, the dedicated cell may not include WTRU assistance information (e.g., satellite footprint information or neighbor cell reference points).

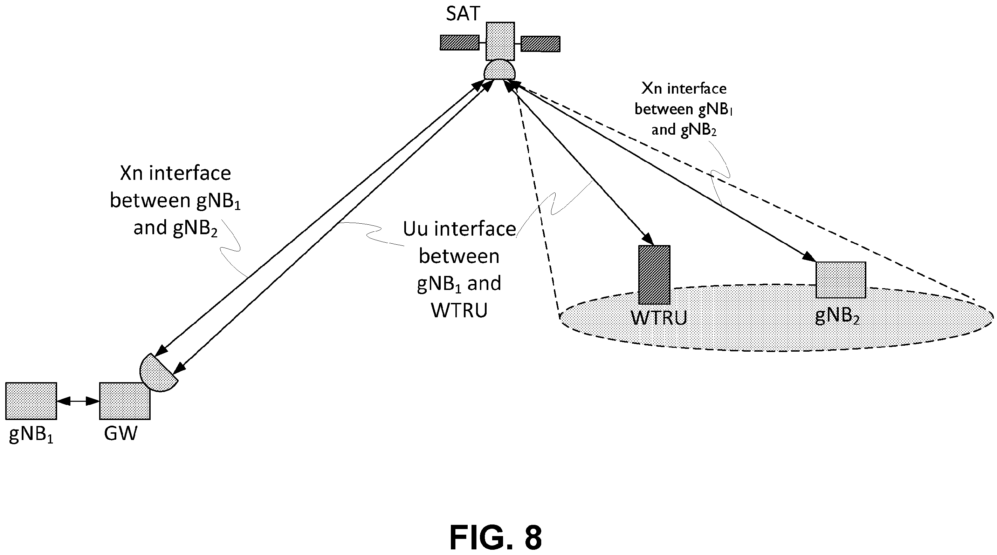

As illustrated in FIG. 8, the cell that is used for the establishment of the inter-gNB signaling may not be a dedicated cell used just for inter-gNB signaling. For example, the cell may be a normal NTN cell. In this case, inter-base station communication may be prioritized on the cell (e.g., a gNB attempting to establish an inter-gNB communication interface may have reserved and/or prioritized access to the cell). For example, a WTRU-side of a gNB accessing a cell to establish an interface used for inter-gNB signaling may use dedicated air interface resources to establish the interface. For example, the WTRU-side of the gNB may initiate a RACH procedure using resources that are dedicated for inter-base station communication. The dedicated air interface resources may be different from resources used and/or available to a regular WTRU accessing that cell. The WTRU-side of a gNB may be the mobile termination (MT) side of the gNB, or any other components of the gNB that are capable of performing one or more WTRU capabilities (e.g., tasks that are generally performed by WTRUs, for example, communicating over the Uu interface).

The WTRU-side of the incoming gNB (e.g., gNB2) may distinguish itself from a regular WTRU. For example, the WTRU-side of the incoming gNB may distinguish itself by accessing the cell using one or more of: a dedicated RNTI (e.g., C-RNTI), dedicated RACH resources (e.g., that the WTRU-side may use to initiate a RACH procedure, such as dedicated preambles, RACH occasions, etc.), dedicated channel resources (e.g., time/frequency resources), cell barring mechanisms (e.g., cell barring bit indicating the cell is barred for one or more other network devices), reserved PLMNs, and/or a dedicated unified access control (UAC) category.

The incoming gNB may have a WTRU reception and transmission capability. The incoming gNB may use the capability to communicate with the former gNB. For example, the incoming gNB may access the cell (e.g., either a cell dedicated for inter-gNB signaling or a cell shared with other devices) in the same manner as a WTRU. For example, the WTRU-side of the incoming gNB may perform one or more of: connection setupl(re)establishment (e.g., such as cell synchronization), time/frequency pre-compensation, measurements (e.g., SSB/CSI-RS), and/or random access as specified for a WTRU.

If connection establishment from the WTRU-side of the incoming gNB to the former gNB is successful, high-layer protocols (e.g., Xn-AP, SCTP, IP, etc.) may be established between the former gNB and gNB-side of the incoming gNB. The WTRU-side of incoming gNB may forward all incoming higher layer signaling to the gNB side (e.g., based on the message header). As a result, the signaling interfaces used to perform WTRU mobility management between the gNBs may be established.

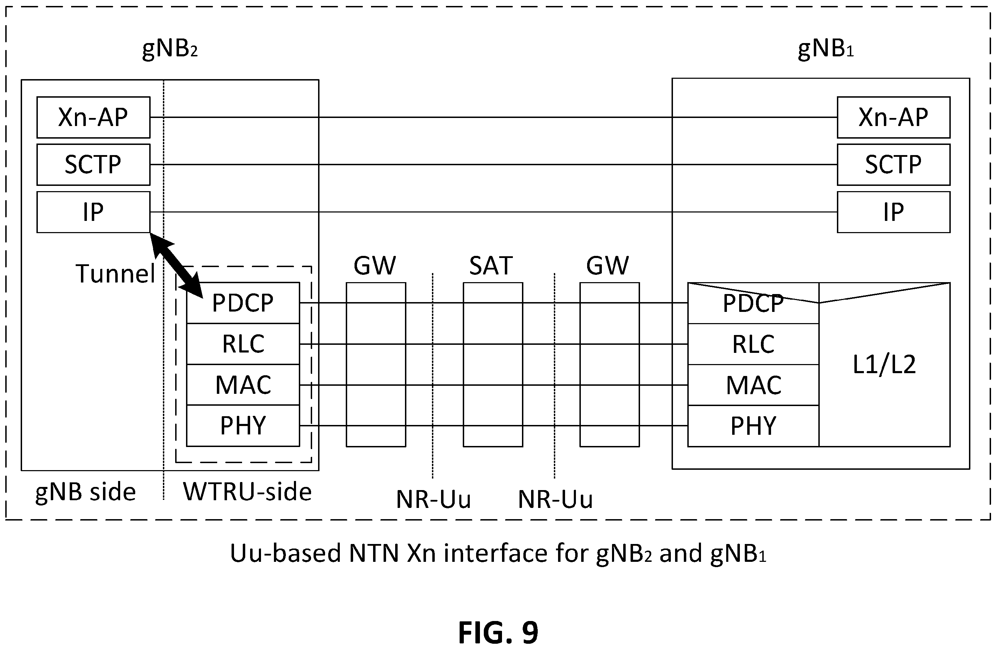

FIG. 9 illustrates an exemplary protocol stack demonstrating a Uu-based Xn interface via the WTRU-side of a gNB (e.g., gNB2). While FIG. 9 illustrates each of the gNBs as accessing the satellite via a gateway, one or both of the gNBs may access the satellite without the use of a gateway.

The WTRU-side of a gNB may be continually, periodically, or conditionally enabled/activated or disabled/deactivated.

If the WTRU-side of the gNB is enabled, it may function as a WTRU (e.g., perform operations specified for the current RRC connection status such as RRC Idle/Inactive/Connected). If the WTRU-side of the gNB is disabled, the WTRU-side may suspend one or more operations. For example, the WTRU-side of the gNB may disable operations which are performed in an RRC state (e.g., paging reception and/or measurements).

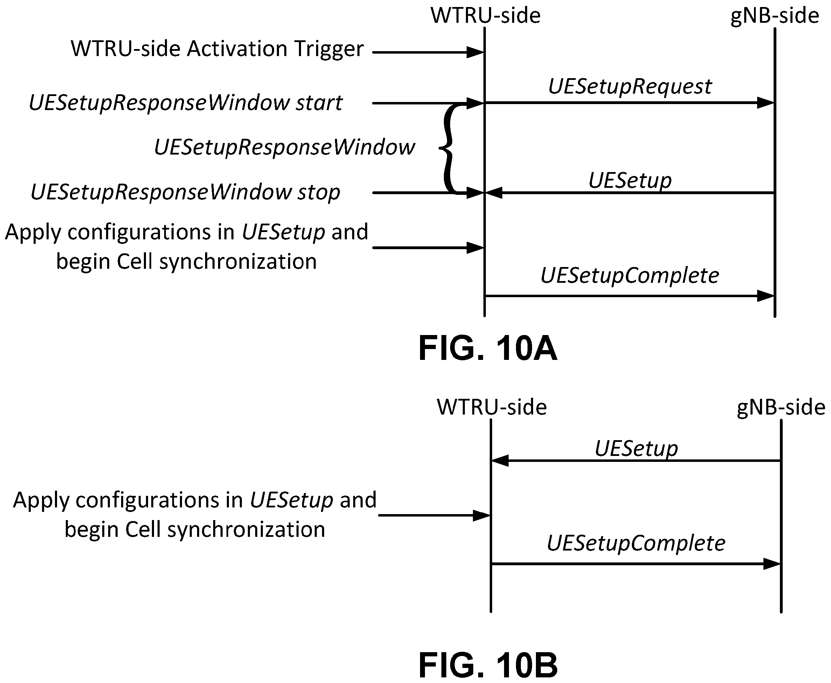

FIGs. 10A and 10B illustrate an exemplary setup of a WTRU-side of a gNB. As illustrated, a deactivated WTRU-side of a gNB may send an activation request message (e.g., a *UESetupRequest* message or *UEActivationRequest* message) to initiate a setup/activation procedure.

The activation request message may be sent to a gNB-side of the same gNB, the core network, or another network node (e.g., one in which a higher-layer interface is to be established for purposes of mobility management signaling exchange).

The activation request message may be transmitted via control signaling. For example, the activation request message may be transmitted via radio resource control (RRC) signaling or a medium access control (MAC) control element (CE). The activation request message may be sent during the random access procedure (e.g., via msgA, msg3, or msg5), via dedicated resources (e.g., stored grants, configured grant occasions, or periodically reserved resources for WTRU activation), and/or using previously provided resources (e.g., resources provided upon WTRU deactivation).

The activation request message may be sent periodically. The activation request message may be sent in response to an activation trigger. For example, the WTRU-side may determine that the activation condition has been satisfied. Based on the activation condition being satisfied, the WTRU-side may send an activation request message to another gNB. The activation trigger may be an event which indicates that the gNB should attempt to establish an Xn interface with another gNB. For example, activation may be triggered by one or more of: reception of an explicit indication (e.g., from the gNB-side of the gNB), reception of a paying signal (e.g., from a gNB attempting to establish an inter-gNB signaling interface), satisfaction of one or more triggering conditions (e.g., the satellite passing a feeder-link switch point or coming within a threshold distance of the feeder-link switch point). For example, a flag bit may be present in paging signaling to indicate that a triggering event has occurred.

The WTRU-side of the gNB may monitor for a response message (e.g., a *UEActivation* or *UESetup* message). For example, WTRU-side of the gNB may monitor for a response message based on transmission of an activation request message. The WTRU-side may monitor indefinitely, or subject to a monitoring window (e.g., a *UESetupResponseWindow*). The monitoring window may start immediately (e.g., upon transmission of/in the first symbol after transmission of the activation request message). The WTRU-side may be configured to start the monitoring window after an offset (e.g., a fixed offset provided by the network, or a WTRU-calculated offset such as the RTT).

The WTRU-side may monitor (e.g., via PDCCH monitoring) for an activation response message (e.g., a network response to the activation request message). The WTRU-side may monitor for a network response while the monitoring window is open. The WTRU-side may stop the timer associated with the monitoring window. The WTRU-side may receive the activation response message. The WTRU-side may stop the timer associated with the monitoring window based on reception of the network response message. The WTRU-side may stop monitoring for a response. The WTRU-side may stop monitoring for a response based on reception of the network response.

The activation response message may indicate for the base station of activate one or more WTRU capabilities (e.g., for the WTRU-side to activate a portion of the base station that is capable of establishing a Uu link, for example, begin WTRU-side setup/activation). The response message may be in response to the activation request message (e.g., as illustrated in FIG. 10A). The response message may be a direct indication from the gNB-side of the gNB (e.g., as illustrated in FIG. 10B).

The response message may include one or more of the following fields: a time in which to activate the WTRU-side (e.g. 10:00:35 UTC, a delta time from the reception of the response message, etc.), an indication to perform connection establishment (e.g., a flag to indicate that the WTRU-side should attempt a connection establishment as soon as possible, or at some time in the future), information about the anticipated cell of the source gNB and resources to be used at that cell, suspended WTRU-side action to restore (e.g., an indication to activate and/or provide configurations to enable one or more of: paging reception, measurements, cell (re)selection, etc.), and/or the like. For example, the information about the anticipated cell may include one or more of: a dedicated set of resources in which to access the network (e.g., dedicated RACH resources, RACH occasions, reserved preambles, RNTIs, and/or time/frequency resources), time and/or frequency synchronization information (e.g., satellite assistance/ephemeris information), a public land mobile network (PLMN) identifier of the anticipated cell of the source gNB, a cell identifier of the anticipated cell, a set of resources on which to perform measurements, a measurement configuration (e.g., a set of SSB or CSI-RS resources) for cell synchronization, and/or activation of paging reception (e.g., the WTRU may receive a paging cycle configuration, such as a RAN or CN paging cycle configuration, and paging RNTI to begin paging monitoring).

Upon reception of a response message, the WTRU-side may perform one or more operations. For example, the WTRU-side may restore previously deactivated operations of the WTRU-side, apply configurations (e.g., indicated, provided, or default configurations), begin monitoring for paging (e.g., monitor for PDCCH during a provided or default paging cycle via the allocated paging RNTI), perform cell synchronization (e.g., perform measurements, apply time-frequency pre-compensation using satellite ephemeris data), perform connection establishment (e.g., as indicated within the response message), and/or set up a tunnel to the gNB-side. Performing connection establishment may be conditional on information provided within the response message (e.g., the connection establishment may be performed at a dedicated time, using indicated resources, and/or to an indicated cell or PLMN).

As illustrated in FIG. 10B, the WTRU-side may be activated directly (e.g., without prior transmission of an activation request message). For example, the WTRU-side may be activated upon reception of an activation message (e.g., *UEActivation* or *UESetup*)*.* The activation message may be received from the gNB-side of the gNB. The activation message may be sent in response to a paging message and/or setup message from another gNB (e.g., a gNB attempting to establish an inter-gNB signaling interface), or from a core network.

The gNB-side of the gNB may be the receiving entity for an activation message. For example, upon reception of the activation message by the gNB-side, the gNB may activate and/or establish a WTRU-side.

The WTRU-side may transmit an acknowledgement (e.g., *UESetupComplete*) that the WTRU setup was successful. For example, the WTRU-side may transmit an acknowledgement (e.g., *UESetupComplete*) that the WTRU setup was successful, based on successful reception of the activation message and/or successful implementation of corresponding actions (e.g., according to a default setup procedure or as indicated directly within the activation message), For example, the WTRU-side may transmit the acknowledgement to the gNB-side, core network, or other gNB from which the WTRU-side received the activation message.

A WTRU-side may receive an explicit indication to deactivate WTRU-side functionality. For example, upon connection release, the WTRU-side may receive a deactivation message.

The WTRU-side may receive a deactivation message in response to a connection setup/resume message (e.g., *RRCSetup* and/or *RRCResume,* respectively). For example, the WTRU may receive a *UEDeactivation* message. The *UEDeactivation* message may include, for example, one or more of the following fields: an identifier for the WTRU-side (e.g., a C-RNTI), an indication to discard one or more stored configurations (e.g., RRC configurations), an indication to maintain one or more stored configurations, and indication to stop and/or reset timers and/or counters, an indication to release established protocol layers and/or interfaces (e.g., terminate any Xn-AP, IP, GTP-U, SCTP sessions), an indication to flush one or more hybrid automatic repeat request (HARQ) buffers, an indication to suspend uplink (UL) transmissions (e.g., dynamic UL grants, configured grants, random access messages, HARQ/ARQ retransmissions, etc.), an indication to suspend DL reception (e.g., DL assignments, semi-persistent scheduling, random access messaging, etc.), one or more RRC Idle/Inactive procedures to suspend (e.g., suspend one or more of RAN/CN originated paging, measurements, cell (re)selection, etc.), and/or one or more resources or a range of resources (e.g., time, frequency, and/or spatial) in which to apply the WTRU-side deactivation

The WTRU-side may receive a *UEDeactivationwithActivationSuspend* message. The *UEDeactivationwithActivationSuspend* message may include one or more fields, a set of resources in which to apply deactivation/suspension actions (e.g., the WTRU-side may apply deactivation/suspension actions until 10:00:35 UTC time, or for the next "X" time units), and/or one or more conditions to initiate WTRU-side setup.

The WTRU-side may perform one or more actions (e.g., one or more of the actions listed herein) upon reception of the deactivation message. The deactivation message may be received via control signaling (e.g., RRC signaling or MAC CE) and may originate from the gNB-side of the network node, another network node, or the core network.

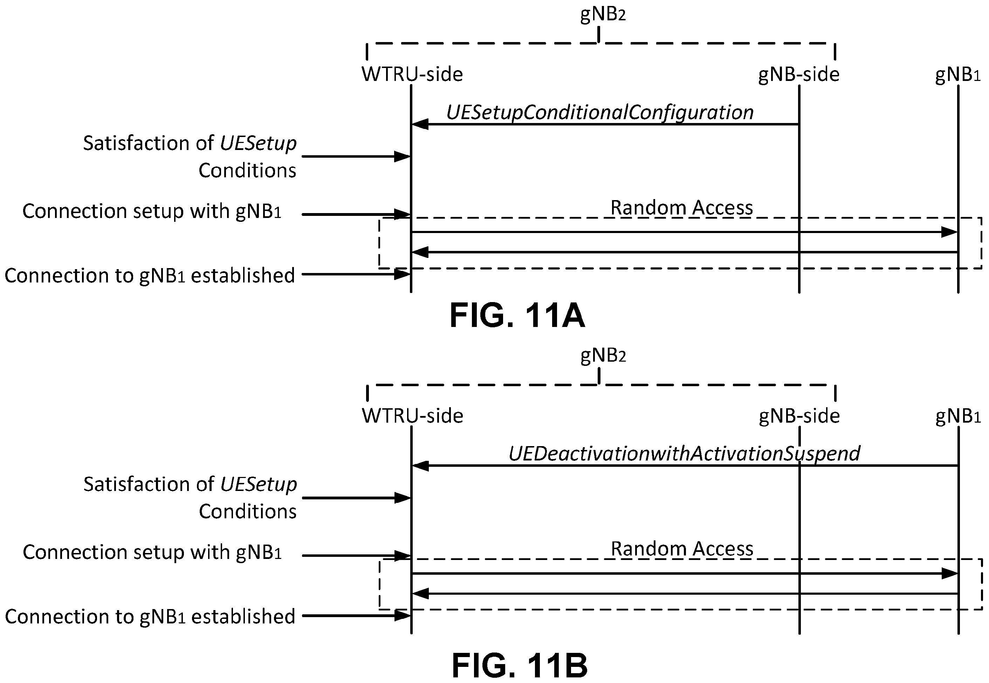

The WTRU-side activation/setup may be performed based on satisfaction of one or more conditional activation criteria (e.g., a conditional configuration). The conditional activation criteria may be provided by the gNB-side of the gNB or another gNB. The conditional activation criteria may be provided via a conditional configuration message (e.g., *UESetupConditionalConfiguration*), as illustrated in FIGs. 11A and 11B.

The conditional configuration message may be received via control signaling (e.g., RRC signaling or MAC CE). The conditional configuration message may include one or more of the following information fields: conditional configuration(s) to apply upon satisfaction of triggering conditions (e.g., paging configurations, RACH configurations, and/or measurement configurations), triggering conditions to activate the conditional configuration and/or WTRU-side setup (e.g., time conditions, periodic conditions, location conditions), a dedicated set of resources in which to access the network (e.g., dedicated RACH resources, RACH occasions, reserved preambles, RNTIs, or time and/or frequency resources), time and/or frequency synchronization information (e.g., satellite ephemeris information), a PLMN identifier, a cell identifier, a duration to maintain and/or store configurations and/or triggering conditions (e.g., a time or a set of resources for which to maintain the configurations and/or conditions), a flag indicating the information is a delta-change over a set of indications and/or triggering conditions (e.g., indicated within a previous conditional configuration message or a default configuration(s)), an indication to delete one or more previously stored configuration(s) and/or triggering conditions, an indication to maintain one or more previously stored and/or received configuration(s) and/or triggering conditions, and/or an index to a stored or pre-configured configuration(s) and/or triggering condition(s).

The WTRU-side may store the received configuration(s) and/or triggering condition(s). For example, the WTRU-side may store the received configuration(s) and/or triggering condition(s) based on the reception of the conditional configuration message. For example, the WTRU-side may store this information for the duration of its operation. The WTRU may store the information for a finite period (e.g., until "X" time, for a period of "Y" time units, or for a period of "Z" resources). The WTRU-side may then evaluate the triggering condition(s).

The WTRU-side may receive a subsequent conditional configuration message with a different set of configuration(s) and/or triggering condition(s) compared to the original conditional configuration message. The WTRU-side may perform one or more of the following actions: delete any previously stored configuration(s) and/or triggering condition(s), replace the configuration(s)/triggering condition(s) with an updated value provided within the subsequent message, apply a delta change to a previously stored set of configuration(s) and/or triggering condition(s), apply a delta change to a default configuration, maintain one or more previous configuration(s) and/or triggering condition(s), store new configuration(s) and/or triggering condition(s). The WTRU-side may perform the one or more actions based on an indication within the conditional configuration message.

One or more of the information field(s), configuration(s), and/or triggering condition(s) for a conditional WTRU setup may be provided by the gNB-side or another network node. For example, the information field(s) may be provided upon deactivation of the WTRU-side. For example, the information field(s) may be included within a *UEDeactivationwithActivationSuspend* message. The information field(s) may be provided along with any other information fields as described above).

The triggering condition(s) described herein may be used to trigger an RRC state transition of the WTRU-side. For example, the triggering condition(s) may be used to trigger a transition from an RRC_IDLE or RRC_INACTIVE WTRU mode to an RRC_CONNECTED mode. For example, the transition may be triggered via a triggering transmission (e.g., an *RRCSetup* or *RRCResume*)*.* The triggering conditions described herein may be used to trigger WTRU-side request to perform WTRU setup (e.g., via transmission of a *UESetupRequest* message), as described herein.

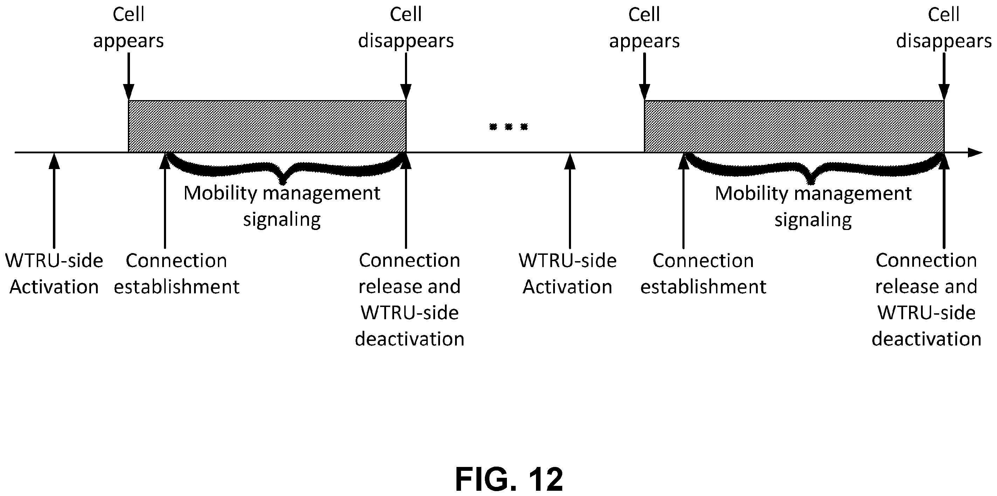

As illustrated in FIG. 12, the WTRU-side may be periodically activated. For example, the WTRU-side may be periodically activated to coincide with the timing of feeder-link switch(es) performed by successive satellites within an orbit. The WTRU-side may receive a series of times in which to perform WTRU-side setup (e.g., via transmission of a *UESetupRequest*), activate WTRU-side functionality (e.g., apply one or more configuration(s)), and/or perform a connection establishment (e.g., via transmission of a *RRCSetupRequest*/*RRCResumeRequest* or via random access).

The WTRU-side may be provided/configured with a time (e.g., UTC 10:00:32). In some examples, the WTRU-side may be provided/configured with a fixed timing offset (e.g., 5 minutes or X frames). A activation/connection/handover condition may be satisfied by a time associated with the satellite position being within the fixed offset from a time associated with the satellite position passing the location (e.g., of the feeder-link switch point). For example, the WTRU-side may perform one or more of: WTRU-side setup (e.g., via transmission of a *UESetupRequest*), activation of the WTRU-side (e.g., apply one or more configuration(s)), and/or connection establishment (e.g., via transmission of a *RRCSetupRequest*/*RRCResumeRequest* or random access) at each time equal to original time + X*Offset, wherein X may be a configurable number (e.g., an integer).

The WTRU-side may be periodically deactivated using one or more of the techniques described herein.

Different triggering conditions may indicate for the gNB to activate the WTRU-side or to establish a connection to another gNB. For example, the WTRU-side may be configured with one or more of the following triggering condition(s) and/or provided with threshold(s) based on one or more of the following: a location (e.g., of a satellite), a time (e.g., 10:00:35 UTC), the distance of a satellite from a reference point (e.g., distance between the satellite and a feeder-link switch point), the distance between the gNB and the satellite, the distance between the WTRU-side and the satellite, the distance between the gNB (or WTRU-side) and a reference point (e.g., center of a cell), the distance between the gNB (or WTRU-side) and a footprint edge of the satellite, a time range (e.g., activation between 10:00:35 UTC and 10:00:40 UTC), and/or the reference signal received power (RSRP) or reference signal received quality (RSRQ) of a cell.

The WTRU-side may monitor whether the triggering condition(s) are fulfilled. For example, the monitoring may be continuous or periodic. The monitoring may begin after the WTRU-side is configured with of one or more triggering condition(s).

The WTRU-side may perform one or more of the following: initiate WTRU setup (e.g., via transmission of a *UESetupRequest*), activate the WTRU-side (e.g., apply one or more configuration(s)), and/or perform a connection establishment (e.g., via transmission of a *RRCSetupRequest*/*RRCResumeRequest* or random access). For example, the WTRU-side may perform one or more of these operations (e.g., connection establishment, WTRU-side activation, etc.) based on the satisfaction of one or more of the configured triggering conditions. For example, a first (e.g., target) base station (e.g., gNB) with an activated WTRU-side may determine that a handover condition associated with a satellite position relative to a location (e.g., a feeder-link switch point) has been satisfied. The first base station may perform connection establishment between the first base station and a second base station (e.g., a second gNB). For example, the first base station may initiate a random access channel (RACH) procedure with the second base station based on the handover condition being satisfied. The first base station may establish a Uu link between the first base station and the second base station. The Uu link may be established through a satellite link.

The WTRU-side may be conditionally deactivated using any of the techniques described herein.

If the WTRU-side of a gNB is disabled, the WTRU-side may not perform WTRU actions (e.g., equivalent to a legacy WTRU that is powered off). If the WTRU-side of a gNB is disabled, the WTRU-side may be operating in RRC_IDLE or RRC_INACTIVE mode. For example, when disabled, the WTRU-side may be performing normal IDLE/INACTIVE mode WTRU actions. For example, the WTRU-side may perform legacy IDLE/INACTIVE cell selection/re-selection. The WTRU-side may be configured with information to prioritize the anticipated cell (e.g., provided by the source gNB). The priority information may include a physical cell identifier (PCI), a frequency, and/or the like. For example, if the WTRU-side detects the anticipated cell (e.g., signaling associated with the anticipated cell), the WTRU-side may perform cell re-selection towards that cell. The cell re-selection may be constrained by the signal level quality of the detected cell (e.g., based on an absolute threshold, a relative threshold to the current serving cell, etc.). The WTRU-side may receive assistance information regarding the source cell from the gNB-side (e.g., within the *UESetup* message).

If the WTRU-side of the gNB is disabled, the WTRU-side may be operating in RRC_IDLE or RRC_INACTIVE mode. For example, when disabled, the WTRU-side may be performing a subset of or a modified version of the normal IDLE/INACTIVE mode actions. For example, the WTRU-side may not perform cell selection or re-selection (e.g., until the WTRU-side has detected a specific cell). For example, the WTRU-side may detect the cell (e.g., signaling associated with the cell) using PCI, frequency, and/or the like. The cell re-selection may be constrained by the signal level quality of the detected cell (e.g., based on an absolute threshold, a relative threshold to the current serving cell, etc.).

If the WTRU-side of the gNB is enabled, the WTRU-side may be operating in RRC_IDLE or RRC_INACTIVE mode. For example, when enabled, the WTRU-side may be performing a subset of or a modified version of the normal IDLE/INACTIVE mode actions. For example, the WTRU-side may be configured to trigger a connection establishment/resume upon the detection of a specific cell (e.g., using PCI, frequency, etc., that is used to identify the anticipated cell from the source gNB). The connection that is established/resumed may be a conditional connection. For example, the connection may be constrained by the signal level quality of the detected cell (e.g., based on an absolute threshold, a relative threshold to the current serving cell, etc.).

If the WTRU-side of the gNB is enabled, the WTRU-side may be operating in RRC_CONNECTED mode. For example, when enabled, the WTRU-side may be performing a subset of, or a modified version of, the CONNECTED mode actions. For example, the WTRU-side may not actively monitor the PDCCH of the current serving cell (e.g., if that current serving cell is not the anticipated cell from the source gNB). The WTRU-side may continue performing neighbor cell measurements. The WTRU-side may start a connection with the anticipated cell. The connection may be established upon the WTRU-side detecting the anticipated cell (e.g., detecting signaling associated with the cell). The WTRU-side may start the connection by performing an RRC re-establishment procedure towards the anticipated cell. The re-establishment may be constrained by the signal level quality of the detected cell (e.g., based on an absolute threshold, a relative threshold to the current serving cell, etc.).

The WTRU-side may start a connection with a cell by executing a cell handover (CHO) associated with that cell. The WTRU-side may start the connection upon detection of the anticipated cell.

The source gNB may initiate the Xn setup towards the target gNB. The target gNB may initiate the Xn setup towards the source gNB. The Xn setup may be initiated after a connection with a cell is established.

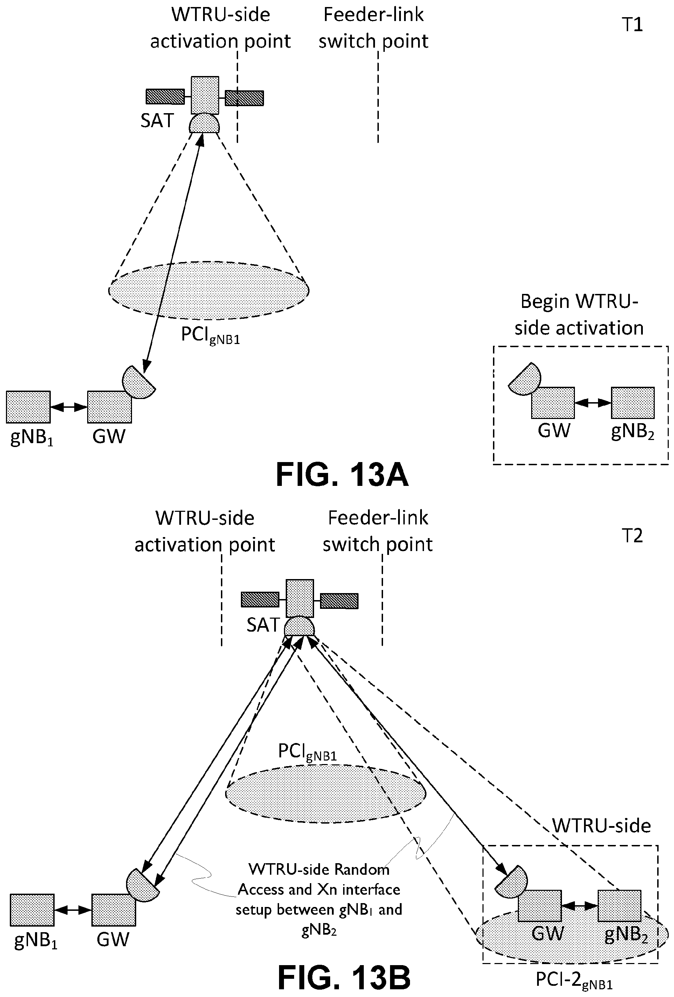

Inter-gNB signaling may be sent via an NR-Uu interface. For example, as illustrated in FIGs. 13A-13D, a dedicated cell may be created for the incoming gNB2. The incoming network node (e.g., gNB2) may be serviced by a cell that is shared with other devices (e.g., as described with respect to FIG. 8).

As illustrated in FIG. 13A, at a time T1, an activation/connection/handover condition for WTRU-side setup and/or connection establishment may be satisfied. The activation/connection/handover condition may be associated with a satellite position relative to a location. For example, the activation/connection/handover condition may be satisfied by the satellite being within a distance threshold from the location (e.g., a feeder-link point). The WTRU-side setup and/or connection establishment may be initiated by the WTRU-side (e.g., in response to the activation/connection/handover condition being satisfied). The WTRU-side setup and/or connection establishment may be initiated via transmission of a *UESetupRequest* to the gNB-side of gNB2. The *UESetupResponseWindow* may be started. The WTRU-side may begin monitoring PDCCH for a *UESetup* message.

The WTRU-side may receive the *UESetup* message from the gNB-side of gNB2. The *UESetup* message may indicate one or more configuration(s). The WTRU-side may apply the indicated configuration(s). The WTRU-side may begin synchronization to gNB1.

As illustrated in FIG. 13B, at a time T2, the WTRU-side may initiate random access to gNB1 using the configuration(s) indicated by the *UESetup* message. The WTRU-side may use identifiers and/or other resources to initiate the random access.

The WTRU-side may begin relaying inter-gNB interface setup messages (e.g., the *XNSetupRequest* message) from gNB1 to the gNB-side of gNB2. The WTRU-side may begin relaying the messages upon successful connection establishment with gNB1.

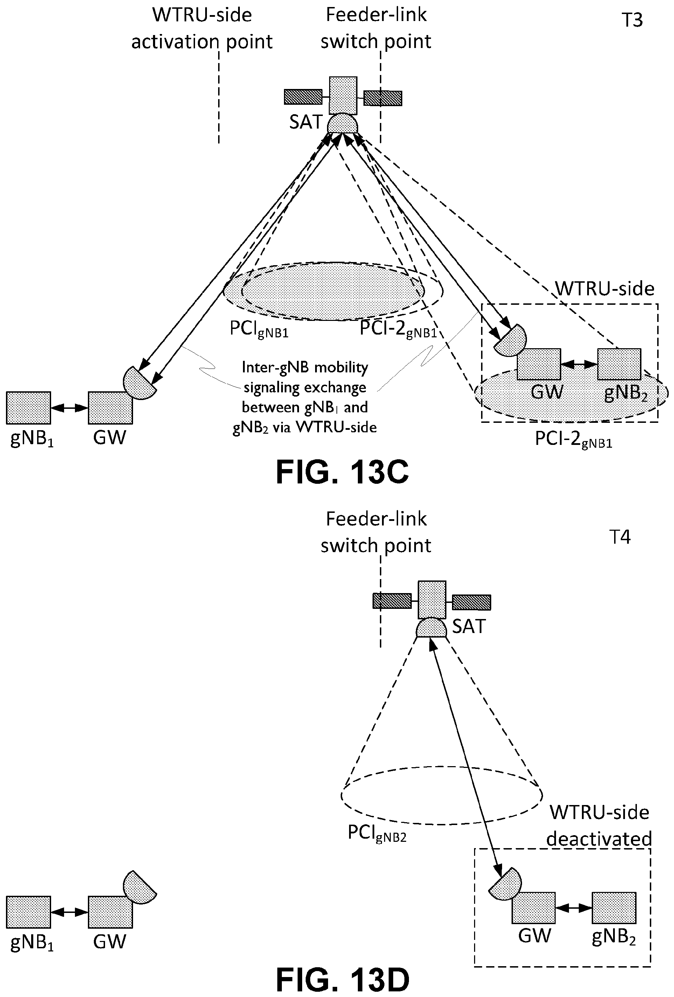

As illustrated in FIG. 13C, at a time T3, the WTRU-side may complete the inter-gNB signaling interface setup. For example, the WTRU-side may complete the setup by forwarding the *XNSetupResponse* message to the gNB-side of gNB2. gNB1 and gNB2 may begin transfer of mobility management signaling via the WTRU-side of gNB2. The mobility management signaling may be part of a mobility management signaling exchange. The mobility management signaling exchange may be associated with transitioning one or more WTRU(s) (e.g., user equipments) from gNB1 to gNB2. The mobility management signaling may be transferred via a Uu link (e.g., that had been established as described herein).

Upon completion of the mobility management signaling exchange, the WTRU-side of gNB2 may receive, from gNB1, a deactivation command. Based on the deactivation command, gNB2 may deactivate one or more WTRU capabilities (e.g., may deactivate the portion of gNB2 that is capable of establishing the Uu link, for example, the WTRU-side of gNB2). For example, as illustrated in FIG. 13D, at a time T4, WTRUs previously served by gNB1 may be successfully moved to gNB2. The WTRU-side of gNB2 may receive a *UEDeactivation* message terminating WTRU-side functionality for gNB2.

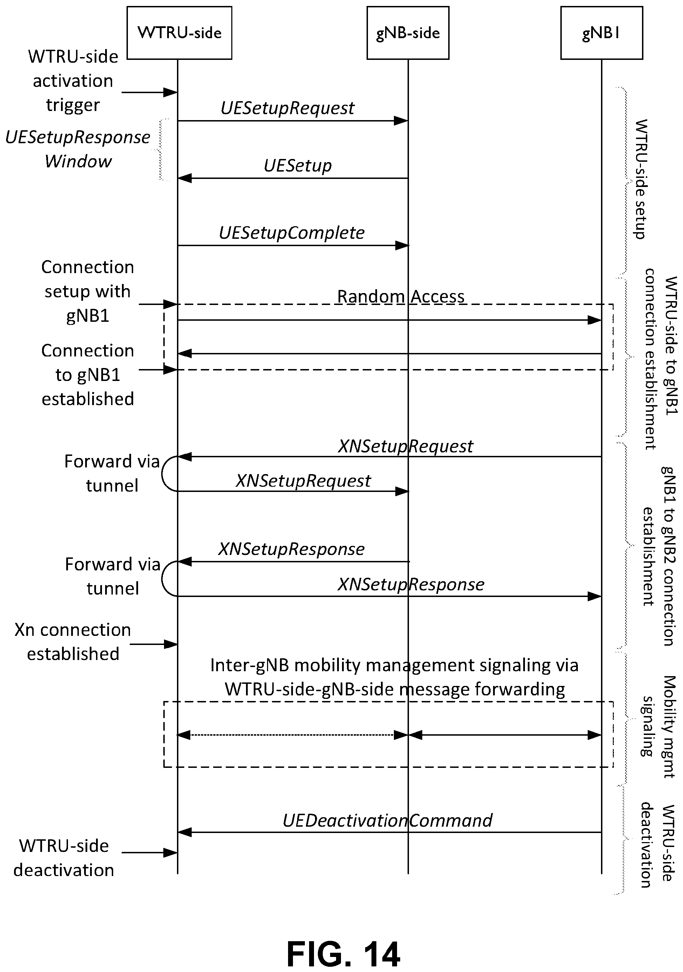

FIG. 14 illustrates an example of the signaling exchange described above.

The WTRU-side setup may be initiated by the gNB-side of the incoming gNB. For example, some signaling in the WTRU-side setup illustrated in FIG. 14 may be replaced by the message exchange described with respect to FIG. 10B.

The WTRU-side setup may be conditionally triggered. For example, the WTRU-side setup may be triggered by a conditional configuration (e.g., provided by the gNB-side of gNB2). For example, the WTRU-side setup illustrated in FIG. 14 may be replaced by the message exchange described with respect to FIG. 11A.

The WTRU-side deactivation may be triggered by a conditional configuration (e.g., provided upon release by a gNB). For example, the WTRU-side deactivation illustrated in FIG. 14 may be replaced by the message exchange described with respect to FIG. 11B. For example, the WTRU-side reactivation message may be replaced with a *UEDeactivationwithActivationSuspend* message.

Device and techniques for inter-node mobility management are provided herein.

An example device may be a first base station that includes a processor configured to perform one or more actions. The first base station may determine that a handover condition has been satisfied. The handover condition may be associated with a satellite position relative to a location. The first base station may initiate a random access channel (RACH) procedure with a second base station based on the handover condition being satisfied. The first base station may establish a Uu link between the first base station and the second base station. The Uu link may be established through a satellite link. The first base station may receive mobility management signaling from the second base station via the Uu link.

The handover condition may be satisfied by the satellite position being within a distance threshold from the location. The handover condition may be satisfied by a first time associated with the satellite position being within a fixed timing offset from a second time associated with the satellite position passing the location. The RACH procedure may be initiated using resources that are dedicated for inter-base station communication.

The first base station may detect a cell (e.g., signaling associated with the cell) that is dedicated for inter-base station communication or a cell on which inter-base station communication is prioritized. The first base station may determine that an activation condition has been satisfied. The first base station may, based on the activation condition being satisfied, send an activation request message to the second base station. The first base station may receive, from the second base station, an activation response message that indicates for the first base station to activate one or more WTRU capabilities (e.g., a portion of the first base station that is capable of establishing the Uu link).

The mobility management signaling may be part of a mobility management signaling exchange. The mobility management signaling exchange may be associated with transitioning a wireless transmit/receive unit (WTRU) from the second base station to the first base station. Upon completion of the mobility management signaling exchange, the first base station may receive, from the second base station, a deactivation command. Based on the deactivation command, the first base station may deactivate one or more WTRU capabilities (e.g., the portion of the first base station that is capable of establishing the Uu link).

The first base station may determine that the satellite position is within a distance threshold from the location. In response to the determination that the satellite position is within the distance threshold from the location, the first base station may deactivate one or more WTRU capabilities (e.g., the portion of the first base station that is capable of establishing the Uu link).

The processor may be configured to establish a Uu interface for inter-gNB communication. The processor may be configured to tunnel Xn interface information through the Uu interface. For example, the Xn interface information may be tunneled through a UE-side of either the first gNB or the second gNB.

For example, the inter-gNB communication may include communication between a first gNB and a second gNB. The Uu interface may be established through a satellite link. The satellite link may include a first gateway, a satellite, and/or a second gateway. The first gateway may be in radio communication with the first gNB. The second gateway may be in radio communication with the second gNB.

The processor may be further configured to establish a cell for the second gNB. For example, the cell may be dedicated for inter-gNB communication. For example, the cell may be established to prioritize inter-gNB communication.

Although examples described herein have used activation/deactivation of a WTRU-side of a gNB as an exemplary scenario, a person of ordinary skill in the art will appreciate that the examples described herein may equally apply to a legacy WTRU (e.g., a legacy WTRU entering/existing discontinuous coverage or entering a power-saving state).

Although features and elements described above are described in particular combinations, each feature or element may be used alone without the other features and elements of the preferred embodiments, or in various combinations with or without other features and elements.

Although the implementations described herein may consider 3GPP specific protocols, it is understood that the implementations described herein are not restricted to this scenario and may be applicable to other wireless systems. For example, although the solutions described herein consider LTE, LTE-A, New Radio (NR) or 5G specific protocols, it is understood that the solutions described herein are not restricted to this scenario and are applicable to other wireless systems as well.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs). A processor in association with software may be used to implement a radio frequency transceiver for use in a WTRU, terminal, base station, RNC, and/or any host computer.

It is understood that the entities performing the processes described herein may be logical entities that may be implemented in the form of software (e.g., computer-executable instructions) stored in a memory of, and executing on a processor of, a mobile device, network node or computer system. That is, the processes may be implemented in the form of software (e.g., computer-executable instructions) stored in a memory of a mobile device and/or network node, such as the node or computer system, which computer executable instructions, when executed by a processor of the node, perform the processes discussed. It is also understood that any transmitting and receiving processes illustrated in figures may be performed by communication circuitry of the node under control of the processor of the node and the computer-executable instructions (e.g., software) that it executes.

The various techniques described herein may be implemented in connection with hardware or software or, where appropriate, with a combination of both. Thus, the implementations and apparatus of the subject matter described herein, or certain aspects or portions thereof, may take the form of program code (e.g., instructions) embodied in tangible media including any other machine-readable storage medium wherein, when the program code is loaded into and executed by a machine, such as a computer, the machine becomes an apparatus for practicing the subject matter described herein. In the case where program code is stored on media, it may be the case that the program code in question is stored on one or more media that collectively perform the actions in question, which is to say that the one or more media taken together contain code to perform the actions, but that - in the case where there is more than one single medium - there is no requirement that any particular part of the code be stored on any particular medium. In the case of program code execution on programmable devices, the computing device generally includes a processor, a storage medium readable by the processor (including volatile and non-volatile memory and/or storage elements), at least one input device, and at least one output device. One or more programs that may implement or utilize the processes described in connection with the subject matter described herein, e.g., through the use of an API, reusable controls, or the like. Such programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

Although example embodiments may refer to utilizing aspects of the subject matter described herein in the context of one or more stand-alone computing systems, the subject matter described herein is not so limited, but rather may be implemented in connection with any computing environment, such as a network or distributed computing environment. Still further, aspects of the subject matter described herein may be implemented in or across a plurality of processing chips or devices, and storage may similarly be affected across a plurality of devices. Such devices might include personal computers, network servers, handheld devices, supercomputers, or computers integrated into other systems such as automobiles and airplanes.

In describing preferred embodiments of the subject matter of the present disclosure, as illustrated in the Figures, specific terminology is employed for the sake of clarity. The claimed subject matter, however, is not intended to be limited to the specific terminology so selected, and it is to be understood that each specific element includes all technical equivalents that operate in a similar manner to accomplish a similar purpose.

### ITEMIZED LIST OF EMBODIMENTS

1. A first base station comprising:
   a processor configured to:
   determine that a connection establishment condition has been satisfied, wherein the connection establishment condition is associated with a satellite position relative to a location;
   initiate a random access channel (RACH) procedure with a second base station based on the connection establishment condition being satisfied;
   establish a Uu link between the first base station and the second base station, wherein the Uu link is established through a satellite link; and
   receive mobility management signaling from the second base station via the Uu link.
2. The first base station of item 1, wherein the connection establishment condition is satisfied by the satellite position being within a distance threshold from the location.
3. The first base station of item 1, wherein the connection establishment condition is satisfied by a first time associated with the satellite position being within a fixed timing offset from a second time associated with the satellite position passing the location.
4. The first base station of item 1, wherein the RACH procedure is initiated using resources that are dedicated for inter-base station communication.
5. The first base station of item 1, wherein the processor is further configured to detect signaling associated with a cell, wherein the cell is dedicated for inter-base station communication or inter-base station communication is prioritized on the cell.
6. The first base station of item 1, wherein the processor is further configured to:
   determine that an activation condition has been satisfied;
   based on the activation condition being satisfied, send an activation request message to the second base station; and
   receive, from the second base station, an activation response message that indicates for the first base station to activate a wireless transmit/receive unit (WTRU) capability associated with establishing the Uu link.
7. The first base station of item 1, wherein the mobility management signaling is part of a mobility management signaling exchange, wherein the mobility management signaling exchange is associated with transitioning a wireless transmit/receive unit (WTRU) from the second base station to the first base station, and wherein, upon completion of the mobility management signaling exchange, the processor is further configured to:
   receive, from the second base station, a deactivation command; and
   based on the deactivation command, deactivate a WTRU capability associated with establishing the Uu link.
8. The first base station of item 1, wherein the processor is further configured to:
   determine that the satellite position is within a distance threshold from the location; and
   in response to the determination that the satellite position is within the distance threshold from the location, activate a wireless transmit/receive unit (WTRU) capability associated with establishing the Uu link.
9. A method, performed by a first base station, comprising:
   determining that a connection establishment condition has been satisfied, wherein the connection establishment condition is associated with a satellite position relative to a location;
   initiating a random access channel (RACH) procedure with a second base station based on the connection establishment condition being satisfied;
   establishing a Uu link between the first base station and the second base station, wherein the Uu link is established through a satellite link; and
   receiving mobility management signaling from the second base station via the Uu link.
10. The method of item 9, wherein the connection establishment condition is satisfied by the satellite position being within a distance threshold from the location.
11. The method of item 9, wherein the connection establishment condition is satisfied by a first time associated with the satellite position being within a fixed timing offset from a second time associated with the satellite position passing the location.
12. The method of item 9, wherein the RACH procedure is initiated using resources that are dedicated for inter-base station communication.
13. The method of item 9, wherein the method further comprises detecting signaling associated with a cell, wherein the cell is dedicated for inter-base station communication or inter-base station communication is prioritized on the cell.
14. The method of item 9, wherein the mobility management signaling is part of a mobility management signaling exchange, wherein the mobility management signaling exchange is associated with transitioning a wireless transmit/receive unit (WTRU) from the second base station to the first base station, and wherein, upon completion of the mobility management signaling exchange, the method further comprises:
   receiving, from the second base station, a deactivation command; and
   based on the deactivation command, deactivating a WTRU capability associated with establishing the Uu link.
15. The method of item 9, wherein the method further comprises:
   determining that the satellite position is within a distance threshold from the location; and
   in response to the determination that the satellite position is within the distance threshold from the location, activating a wireless transmit/receive unit (WTRU) capability associated with establishing the Uu link.

## Claims

1. A first base station comprising:
a processor configured to:
receive configuration information that comprises an indication of a prioritized cell;
detect the prioritized cell, wherein the prioritized cell is associated with a second base station; and
based on the configuration information, establish a Uu link between the first base station and the second base station associated with the prioritized cell, wherein the Uu link is established through a satellite link.

2. The first base station of claim 1, wherein the indication of the prioritized cell comprises a physical cell identifier (PCI) or a frequency associated with the prioritized cell.

3. The first base station of claim 1 or 2, wherein the processor is further configured to determine that a connection establishment condition has been satisfied, wherein the processor being configured to establish the Uu link between the first base station and the second base station is further based on the determination that the connection establishment condition has been satisfied.

4. The first base station of claim 3, wherein the connection establishment condition comprises a signal level quality of the prioritized cell.

5. The first base station of claim 3, wherein the processor being configured to determine that the connection establishment condition has been satisfied comprises the processor being configured to:
determine that a signal level quality of the prioritized cell is above an absolute threshold; or
determine that the signal level quality of the prioritized cell is above a relative threshold compared to a currently serving cell.

6. The first base station of any one of claims 1-5, wherein the prioritized cell is dedicated for inter-base station communication or inter-base station communication is prioritized on the prioritized cell.

7. The first base station of any one of claims 1-6, wherein the prioritized cell is detected while a wireless transmit/receive unit (WTRU) capability associated with establishing the Uu link is in an inactive state.

8. A method, performed by a first base station, the method comprising:
receiving configuration information that comprises an indication of a prioritized cell;
detecting the prioritized cell, wherein the prioritized cell is associated with a second base station; and
based on the configuration information, establishing a Uu link between the first base station and the second base station associated with the prioritized cell, wherein the Uu link is established through a satellite link.

9. The method of claim 8, wherein the indication of the prioritized cell comprises a physical cell identifier (PCI) or a frequency associated with the prioritized cell.

10. The method of claim 8 or 9, wherein the method further comprises determining that a connection establishment condition has been satisfied, wherein establishing the Uu link between the first base station and the second base station is further based on the determination that the connection establishment condition has been satisfied.

11. The method of claim 10, wherein the connection establishment condition comprises a signal level quality of the prioritized cell.

12. The method of claim 10, wherein determining that the connection establishment condition has been satisfied comprises:
determining that a signal level quality of the prioritized cell is above an absolute threshold; or
determining that the signal level quality of the prioritized cell is above a relative threshold compared to a currently serving cell.

13. The method of any one of claims 8-12, wherein the prioritized cell is dedicated for inter-base station communication or inter-base station communication is prioritized on the prioritized cell.

14. The method of any one of claims 8-13, wherein the prioritized cell is detected while a wireless transmit/receive unit (WTRU) capability associated with establishing the Uu link is in an inactive state.
